Europäisches Patentamt

European Patent Office

Office européen des brevets

(11) Veröffentlichungsnummer: **0 424 691 A1**

(12) **EUROPÄISCHE PATENTANMELDUNG**

(21) Anmeldenummer: 90118797.1

(22) Anmeldetag: 01.10.90

(51) Int. Cl.⁵: **H01M  8/02, H01M 8/24**

(30) Priorität: 23.10.89 CH 3831/89

(43) Veröffentlichungstag der Anmeldung:
02.05.91 Patentblatt  91/18

(84) Benannte Vertragsstaaten:
CH DE FR GB IT LI NL SE

(71) Anmelder: ASEA BROWN BOVERI AG

CH-5401 Baden(CH)

(72) Erfinder: **Bossel, Ulf, Dr.**
**Baldeggstrasse 13**
**Ch-5400 Baden(CH)**
Erfinder: **Fried, Reinhard**
**Stockackerstrasse 1**
**CH-5415 Nussbaumen(CH)**

(54) **Bauteilanordnung zur Stromüberführung für keramische Hochtemperatur-Brennstoffzellen.**

(57) Bauteilanordnung zur Stromführung zwischen benachbarten ebenen, stapelförmig angeordneten Brennstoffzellen mit keramischem Feststoffelektrolyt (1), bestehend aus einer die gasförmigen Medien Brennstoff (CH₄) und Sauerstoffträger (O₂) separierenden elektrisch leitenden Trennplatte (4) und beidseits von ihr angeordneten, in ihr fest verankerten Stromkollektoren (5; 8), wobei Trennplatte (4) und brennstoffseitiger Stromkollektor (5) senkrecht zur Plattenebene vergleichsweise starr und der sauerstoffseitige Stromkollektor (8) flexibel ausgeführt ist und beide Stromkollektoren (5; 8) lateral parallel zur Plattenebene frei beweglich auf der jeweiligen Elektrode (3; 2) gleiten können. Variante: Brennstoffseitiger Stromkollektor und Trennplatte sind ein einziges Bauelement.

FIG.1

EP 0 424 691 A1

## BAUTEILANORDNUNG ZUR STROMÜBERFÜHRUNG FÜR KERAMISCHE HOCHTEMPERATUR-BRENNSTOFFZELLEN

### Technisches Gebiet

Hochtemperatur-Brennstoffzellen zur Umwandlung von chemischer Energie in elektrische Energie. Die elektrochemische Energieumwandlung und die hierzu benötigten Vorrichtungen gewinnen dank ihres guten Wirkungsgrades gegenüber anderen Umwandlungsarten an Bedeutung.

Die Erfindung bezieht sich auf die Weiterentwicklung der elektrochemischen Hochtemperatur-Zellen unter Verwendung von keramischen Feststoffelektrolyten als Ionenleiter, wobei die Zellen weitgehend unabhängig vom verwendeten Brennstoff sein sollen und eine raumsparende Anordnung gewähren sollen.

Im engeren Sinne betrifft die Erfindung eine Bauteilanordnung zur Stromführung zwischen benachbarten flachen, ebenen, stapelförmig angeordneten Hochtemperatur-Brennstoffzellen mit Feststoffelektrolyt auf der Basis von dotiertem, stabilisiertem Zirkonoxyd, wobei jeweils die Sauerstoffelektrode der einen Brennstoffzelle mit der Brennstoffelektrode der nächstfolgenden Brennstoffzelle elektrisch ver bunden und der zwischen den Elektroden liegende Zwischenraum durch eine gasdichte, elektrisch leitende Trennplatte in zwei, die unterschiedlichen gasförmigen Medien Brennstoff und Sauerstoffträger führenden Räume unterteilt ist.

### Stand der Technik

Hochtemperatur-Brennstoffzellen mit keramischem Feststoffelektrolyten sind aus zahlreichen Veröffentlichungen bekannt. Die eigentlichen Elemente für derartige Zellen können die verschiedensten Formen und Abmessungen aufweisen. Um die ohmschen Spannungsverluste klein zu halten, wird allenthalben versucht, die Dicke der Elektrolytschicht möglichst niedrig zu halten. Form und Abmessungen der Elemente richten sich zudem nach der Forderung der Möglichkeit der elektrischen Serieschaltung einer Vielzahl von Zellen, um auf die nötige Klemmenspannung zu kommen und die Ströme vergleichsweise niedrig zu halten.

Im Falle einer stapelförmigen Anordnung einer Vielzahl von plattenförmigen ebenen Brennstoffzellen ähnlich dem Filterpresse-Prinzip muss der Strom senkrecht zur Plattenebene von der Sauerstoffelektrode der einen Zelle zur Brennstoffelektrode der nächstfolgenden Zelle geleitet werden. Als wesentliche Bauelemente sind für diese Funktion elektrische Verbindungsglieder zu den Elektroden (Stromkollektoren) und Trennplatten (Bipolarplatten) erforderlich.

Die bisher bekannten Bauelemente und Bauteilaggregate befriedigen vielfach bezüglich der verwendeten Werkstoffe, der Konstruktion und Fabrikation sowie dem Langzeitverhalten den modernen Anforderungen nicht.

Die bekannten, für Brennstoffzellen verwendeten Grundelemente zeichnen sich meistens durch eine vergleichsweise komplizierte Geometrie aus, die den Bau von kompakten, raumsparenden Anlagen erschwert. Insbesondere lassen die für eine optimale Serieschaltung der Einzelzellen vorgeschlagenen Anordnungen bezüglich Kontaktierung zu wünschen übrig.

Es besteht daher ein grosses Bedürfnis nach Weiterentwicklung, Vereinfachung und Rationalisierung des Aufbaus und der Herstellung von stromführenden Grund-Bauelementen und deren optimale gegenseitige Anordnung basierend auf keramischen Hochtemperatur-Brennstoffzellen.

Zum Stand der Technik werden die nachfolgenden Druckschriften genannt:
- O.Antonsen, W.Baukal und W.Fischer, "Hochtemperatur-Brennstoffbatterie mit keramischem Elektrolyten", Brown Boveri Mitteilungen Januar/Februar 1966, Seiten 21-30,
- US-A-4 692 274
- US-A-4 395 468
- W.J.Dollard und W.G.Parker, "An overview of the Westinghouse Electric Corporation solid oxide fuel cell program", Extended Abstracts, Fuel Cell Technology and Applications, International Seminar, Den Haag, Niederlande, 26. bis 29. Oktober 1987, - F.J.Rohr, High-Temperature Fuel Cells, Solid Electrolytes, 1978 by Academic Press, Inc., Seite 431 ff. - D.C.Fee et al., Monolithic Fuel Cell Development, Argonne National Laboratory, Paper presented at the 1986 Fuel Cell Seminar, Oct. 26 - 29, 1986 Tucson, AZ, U.S. Department of Energy.

### Darstellung der Erfindung

Der Erfindung liegt die Aufgabe zugrunde, eine Bauteilanordnung zur Stromführung zwischen benachbarten ebenen, stapelförmig angeordneten Hochtemperatur-Brennstoffzellen anzugeben, welche einerseits einen guten elektrischen Kontakt sowohl zu den Elektroden der Brennstoffzelle wie zu den Bauteilen unter sich bei Temperaturen bis zu 1000 °C gewährleistet, wobei eine hohe elektrische Leitfähigkeit sowie ein geringer Uebergangswiderstand an den Kontaktstellen gewährleistet werden soll. Die Bauteilanordnung soll einfach im Aufbau sein und eine möglichst hohe Langzeitstabilität aufweisen. Die die Anordnung konstituierenden Bauelemente sollen kostengünstig, reproduzierbar und auswechselbar hergestellt werden können.

Diese Aufgabe wird dadurch gelöst, dass in der eingangs erwähnten Bauteilanordnung eine Trennplatte und beidseits von ihr angeordnete und mit ihr fest verbundene Stromkollektoren vorhanden sind, wobei die Trennplatte und der Stromkollektor auf der Brennstoffseite senkrecht zur Plattenebene vergleichsweise starr und der Stromkollektor auf der Sauerstoffseite vergleichsweise flexibel ausgeführt sind und dass die Stromkollektoren auf beiden Seiten lateral parallel zur Plattenebene frei beweglich auf der jeweiligen Elektrode gleitend ausgeführt sind.

Weg zur Ausführung der Erfindung

Die Erfindung wird anhand der nachfolgenden, durch Figuren näher erläuterten Ausführungsbeispiele beschrieben.

Dabei zeigt:

Fig. 1 einen schematischen Aufriss/Schnitt durch eine Bauteilanordnung mit Trennplatte und beidseitigen Stromkollektoren,

Fig. 2 einen schematischen Aufriss/Schnitt durch eine Bauteilanordnung mit als brennstoffseitigem Stromkollektor und Trennplatte dienendem integrierten Bauelement.

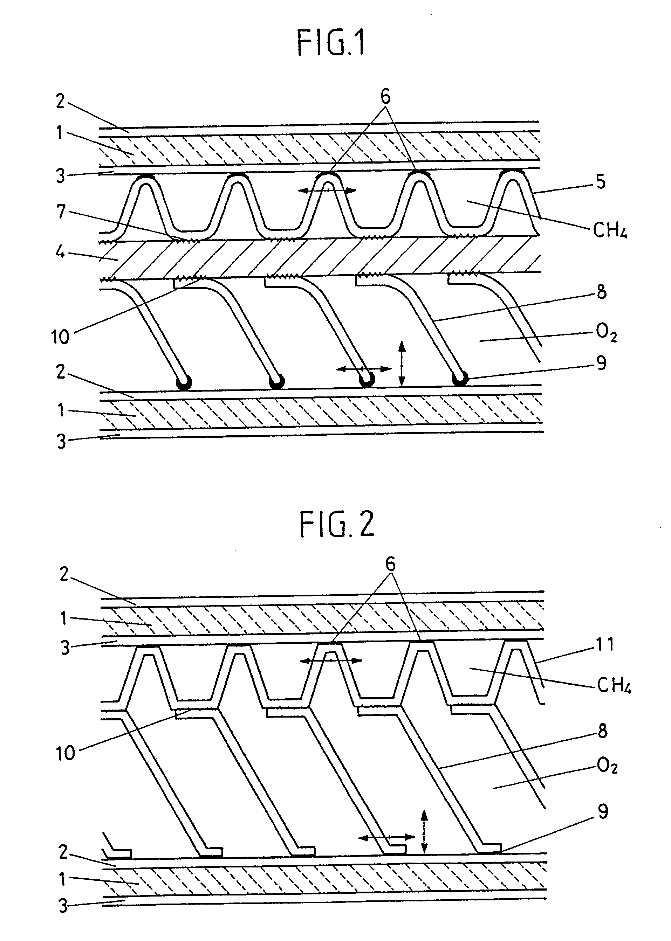

In Fig. 1 ist ein schematischer Aufriss/Schnitt durch eine Bauteilanordnung mit Trennplatte und beidseitigen Stromkollektoren dargestellt. Die eigentliche Brennstoffzelle besteht aus dem flachen ebenen keramischen Feststoffelektrolyten 1 aus dotiertem, stabilisiertem $ZrO_2$, welcher beidseitig mit Elektroden beplankt ist. 2 ist die poröse (positive) Sauerstoffelektrode aus einem dotierten La/Mn-Perowskit, 3 die entsprechende poröse (negative) Brennstoffelektrode aus einem Ni/$ZrO_2$-Cermet. 4 stellt eine die Räume der gasförmigen Medien separierende, gasdichte, elektrisch leitende Trennplatte dar. Auf der letzteren sind die Stromkollektoren fest verschweisst oder verlötet auf beiden Seiten angebracht. 5 ist der Stromkollektor auf der Brennstoffseite, hier in Form eines mit Erhebungen (Noppen, Wellen, Leisten etc.) versehenen dünnen Bleches (meist aus Ni) ausgebildet. Die gegen die Brennstoffelektrode 3 gerichteten Erhebungen weisen an der Kontakt/Berührungs-Fläche Edelmetallbeschichtungen 6 (z.B. aus Au) auf. Der brennstoffseitige Stromkollektor 5 ist über eine Vielzahl von Löt- oder Schweissverbindungen 7 mit der Trennplatte 4 fest verbunden, derart, dass ein in Richtung senkrecht zur Plattenebene vergleichsweise steifes monolithisches Gebilde mit hoher Warm-(Kriech-)Festigkeit vorliegt. Die Erhebungen des Stromkollektors 5 können sich indessen verhältnismässig frei lateral (parallel zur Plattenebene) längs der Brennstoffelektrode bewegen (durch horizontalen Doppelpfeil angedeutet). Auf diese Weise werden unzulässig hohe Wärmespannungen abgebaut. 8 ist der Stromkollektor auf der Sauerstoffseite, hier in Form einer Vielzahl von kammartig angeordneten Kontaktfingern (Lamellen, Flachfedern) ausgebildet. Die gegen die Sauerstoffelektrode 2 gerichteten Köpfe der Kontaktfinger weisen an der Kontakt/Berührungs-Fläche Edelmetallbeschichtungen 9 (z.B. aus Pt) in Form von Propfen, Hütchen oder Kappen auf. Die sauerstoffseitigen Kontaktfinger sind über je eine Löt- oder Schweissverbindung 10 mit der Trennplatte 4 verbunden. Der sauerstoffseitige Stromkollektor 8 besitzt eine hohe Elastizität und die Köpfe der Kontaktfinger können sich frei lateral (parallel zur Plattenebene) und vertikal (senkrecht zur Plattenebene) bewegen (durch horizontalen und vertikalen Doppelpfeil angedeutet). Das Symbol $CH_4$ steht allgemein für den vom gasförmigen Brennstoff durchfluteten, das Symbol $O_2$ für den vom gasförmigen Sauerstoffträger (Luft) durchfluteten Raum der Brennstoffzelle.

Fig. 2 bezieht sich auf einen schematischen Aufriss/Schnitt durch eine Bauteilanordnung mit als brennstoffseitigem Stromkollektor und Trennplatte dienendem integrierten Bauelement. Die Bezugszeichen 1 bis 3 entsprechen genau denjenigen der Fig. 1. In der vorliegenden Ausführung fehlt die geometrisch und funktionell separat vorhandende Trennplatte 4. An ihre Stelle tritt das als brennstoffseitiger Stromkollektor und als Trennplatte dienende Bauelement 11. Durch eine spezielle Ausbildung der trapezförmigen verhältnismässig steilen Noppen oder Leisten bzw. Rinnen ist das Bauelement formbeständig genug, um den mechanischen und thermischen Beanspruchungen im Betrieb standzuhalten. 6 stellt wieder eine Edelmetallbeschichtung der höchsten Stellen der Erhebungen von 11 dar. 8 entspricht dem Stromkollektor auf der Sauerstoffseite, der hier eine etwas von Fig. 1 abweichende Form besitzt. 9 ist die entsprechende Edelmetallbeschichtung in Form eines Fleckens oder Tropfens. Ueber die Löt- oder Schweissverbindung 10 zwischen sauerstoffseitigem Stromkollektor und Bauelement 11 wird ein einwandfreier Stromübergang zwischen diesen Bauteilen gewährleistet.

Ausführungsbeispiel 1:

Siehe Fig. 1!

Die Bauteilanordnung zur Stromführung zwischen benachbarten Brennstoffzellen bestand aus den nachfolgenden Elementen:

Stromkollektor, Brennstoffseite

Gasdichte Trennplatte

Stromkollektor, Sauerstoffseite

Die Brennstoffzelle an sich bestand aus einer flachen, ebenen Platte mit in der Mitte angeordnetem Feststoffelektrolyten 1 aus dotiertem, stabilisierten $ZrO_2$, einer damit fest verbundenen Sauerstoffelektrode 2 aus einem La/Mn-Perowskit und einer ebenfalls fest verbundenen Brennstoffelektrode 3 aus einem $Ni/ZrO_2$-Cermet. Die gesamte Dicke der Keramik-Brennstoffzelle betrug ca. 120 $\mu$m, die Fläche 100 cm$^2$.

Der brennstoffseitige Stromkollektor 5 bestand aus einem Blech aus Nickel, in welches auf einem orthogonalen Raster Noppen eingedrückt waren. Die Abmessungen waren die folgenden:

Dicke des Bleches = 0,3 mm

Höhe der Noppen = 1,6 mm

Durchmesser der Noppen am Fuss = 1,4 mm

Durchmesser der Noppen am Kopf = 0,7 mm

Abstand der Noppen = 3 mm

Der Stromkollektor 5 wurde an den abgerundeten Köpfen (Kontakt/Berührungs-Fläche mit der Brennstoffelektrode) der Noppen mit einer Edelmetallbeschichtung 6 in Form einer Au-Auflage von 6 $\mu$m Dicke versehen. Diese Schicht wurde elektrochemisch aufgebracht. Die Edelmetallbeschichtung 6 garantiert einen einwandfreien Stromübergang and der Kontakt/Berührungs-Fläche Stromkollektor/Brennstoffelektrode im Betrieb.

Die gasdichte, elektrisch leitende Trennplatte 4 bestand aus einem 0,5 mm dicken blanken Blech aus einer oxidationsbeständigen Nickelbasis-Superlegierung mit der Handelsbezeichnung Nimonic 75 mit der nachfolgenden Zusammensetzung:

Cr = 19,5 Gew.-%

Ti = 0,4 Gew.-%

Fe = 3,0 Gew.-%

Mn = 0,3 Gew.-%

Si = 0,3 Gew.-%

C = 0,10 Gew.-%

Ni = Rest

Der Stromkollektor 5 wurde an einer Vielzahl von Stellen mit einem Nickellot mit Zusätzen von Ag, Cr und Si fest mit der Trennplatte 4 verbunden (Lötverbindung 7).

Der sauerstoffseitige Stromkollektor 8 bestand aus einer Vielzahl von kammartig angeordneten Kontaktfingern mit den folgenden Abmessungen:

Länge = 15 mm

Höhe = 4 mm

Breite = 2 mm

Dicke = 0,15 mm

Als Werkstoff wurde eine oxyddispersionsgehärtete Nickelbasis-Superlegierung mit dem Handelsnamen MA 754 von Inco mit der nachfolgenden Zusammensetzung gewählt:

Cr = 20,0 Gew.-%

Al = 0,3 Gew.-%

Ti = 0,5 Gew.-%

C = 0,08 Gew.-%

$Y_2O_3$ = 0,6 Gew.-%

Ni = Rest

Die Köpfe der Kontaktfinger des Stromkollektors 8 wurden an ihrer der Sauerstoffelektrode 2 zugewandten Seite mit Edelmetallbeschichtungen 9 in Form einer Pt-Auflage von 30 $\mu$m Dicke versehen. Diese Schichten wurden nach einem Pastenverfahren mit anschliessender Wärmebehandlung aufgetragen.

Die Kontaktfinger des Stromkollektors 8 wurden unter Zuhilfenahme einer Lötverbindung 10 fest mit der Trennplatte 4 verbunden. Zu diesem Zweck wurde ein geringe Zusätze an Ag und Si enthaltendes Lot auf der Basis einer Ni/Cr-Legierung verwendet.

Die Prüfung nach dem Zusammenbau der Bauteilanordnung unter mechanischer und thermischer Belastung ergab, dass durch die starre Verbindung Trennplatte 4 / brennstoffseitiger Stromkollektor 5 einerseits eine genügende Steifigkeit und Warmfestigkeit der Stromübertragungsglieder erzielt wurde, andererseits dank der Flexibilität des sauerstoffseitigen Stromkollektors 8 eine gute Anpassung an Unebenheiten sowie ein hinreichender Ausgleich der Wärmedehnungen gewährleistet war. Die Kontaktkraft pro Kontaktfinger des Stromkollektors B wurde auf ca. $2 \cdot 10^{-2}$ N eingestellt. Dabei betrug die Einfederung durchschnittlich 0,15 mm.

Ausführungsbeispiel 2:

Siehe Fig. 2!

Der Aufbau der Bauteilanordnung zur Stromführung bestand gemäss Fig. 2 lediglich aus den zwei nachfolgenden Elementen:

Stromkollektor, Brennstoffseite, zugleich Trennplatte

Stromkollektor, Sauerstoffseite

Die eigentliche Brennstoffzelle war genau gleich aufgebaut wie in Beispiel 1 und bestand aus dem Feststoffelektrolyten 1, der Sauerstoffelektrode 2 und der Brennstoffelektrode 3.

Der sauerstoffseitige Stromkollektor 8 war ähnlich aufgebaut wie in Beispiel 1 und bestand aus einer Vielzahl von Kontaktfingern, die in geraden Reihen angeordnet waren. Die Abmessungen waren die folgenden:

Länge = 20 mm

Höhe = 5 mm

Breite = 2,2 mm
Dicke = 0,18 mm

Als Werkstoff diente eine oxyddispersionsgehärtete Nickelbasis-Superlegierung mit beschränktem Al-Gehalt von der nachfolgenden Zusammensetzung:
Cr = 18,0 Gew.-%
Al = 1,5 Gew.-%
Mo = 2,5 Gew.-%
W = 3,0 Gew.-%
Ta = 2,0 Gew.-%
Zr = 0,15 Gew.-%
B = 0,01 Gew.-%
C = 0,005 Gew.-%
$Y_2O_3$ = 1,1 Gew.-%
Ni = Rest

Die abgeflachten Köpfe der Kontaktfinger des Stromkollektors 8 wurden an ihrer der Sauerstoffelektrode 2 zugewandten Seite mit Edelmetallbeschichtungn 9 in Form einer Pd-Auflage von 25 $\mu$m Dicke versehen. Diese Schichten wurden nach vorheriger Vergoldung (0,5 $\mu$m Dicke) in mehreren Stufen elektrochemisch aufgetragen.

Auf der Brennstoffseite wurde ein Bauelement 11 verwendet, das gleichzeitig die Funktionen des Stromkollektors und der Trennplatte übernahm. Im wesentlichen bestand das Bauelement 11 aus einem Metallblech, welches Leisten von trapezförmigem Querschnitt aufwies. Die Scheitel der trapezförmigen Welle auf der Seite der Brennstoffelektrode 3 waren schmäler gehalten als diejenigen auf der gegenüberliegenden Seite. Die Abmessungen waren die folgenden:
Dicke des Bleches = 0,35 mm
Höhe der trapezförmigen Leisten = 1,7 mm
Breite der Leisten am Fuss = 1,6 mm
Breite der Leisten am Kopf (Scheitel auf der Seite der Brennstoffelektrode) = 0,6 mm
Abstand der Leisten (Wellenlänge) = 2,7 mm

Als Werkstoff für das Bauelement 11 wurde eine Superlegierung mit dem Handelsnamen Hastelloy X mit der nachfolgenden Zusammensetzung gewählt:
Cr = 22,0 Gew.-%
Co = 1,5 Gew.-%
Mo = 9,0 Gew.-%
W = 0,6 Gew.-%
Fe = 18,5 Gew.-%
Mn = 0,50 Gew.-%
Si = 0,50 Gew.-%
C = 0,10 Gew.-%
Ni = Rest

Die Köpfe (Scheitel auf der Seite der Brennstoffelektrode) der Leisten des Bauelements 11 wurden auf der Kontaktseite zur Brennstoffelektrode 3 mit Edelmetallbeschichtungen 6 aus einer Au/Pd-Legierung in Form einer 25 $\mu$m dicken Auflage versehen. Die Au/Pd-Legierung hatte folgende Zusammensetzung:
Pd = 30 Gew.-%
Au = 70 Gew.-%

Der Schmelzpunkt dieser Legierung liegt mehr als 300 °C über demjenigen des reinen Goldes. Die Edelmetallbeschichtung 6 wurde durch galvanisches Aufbringen von mehreren aufeinanderfolgenden Au- und Pd-Ueberzügen von einigen $\mu$m Dicke und nachfolgendes Diffusionsglühen bei 900 °C 1/2 h hergestellt.

Die Kontaktfinger des sauerstoffseitigen Stromkollektors 8 wurden über eine Lötverbindung 10 mit dem Bauelement 11 an dessen breiteren Scheiteln der Welle zu einem monolithischen Ganzen gefügt. Zu diesem Zweck wurde ein geringe Zu sätze an Ag und Si enthaltendes Lot auf der Basis einer Ni/Cr/Fe-Legierung verwendet.

Die Prüfung ergab ähnliche Verhältnisse wie unter Beispiel 1 angegeben. Unter einer Kontaktkraft von ca. 1,5 $.10^{-2}$ N pro Kontaktfinger des Stromkollektors 8 ergab sich eine Einfederung von ca. 0,12 mm.

Die Erfindung ist nicht auf die Ausführungsbeispiele beschränkt.

Die Bauteilanordnung zur Stromführung zwischen benachbarten flachen, ebenen, stapelförmig angeordneten Hochtemperatur-Brennstoffzellen mit Feststoffelektrolyt 1 auf der Basis von dotiertem, stabilisiertem Zirkonoxyd, wobei jeweils die Sauerstoffelektrode 2 der einen Brennstoffzelle mit der Brennstoffelektrode 3 der nächstfolgenden Brennstoffzelle elektrisch verbunden und der zwischen den Elektroden 2; 3 liegende Zwischenraum durch eine gasdichte, elektrisch leitende Trennplatte 4 in zwei, die unterschiedlichen gasförmigen Medien Brennstoff $CH_4$ und Sauerstoffträger $O_2$ führenden Räume unterteilt ist, besteht grundsätzlich darin, dass eine Trennplatte 4 und beidseits von ihr angeordnete und mit ihr fest verbundene Stromkollektoren 5; 8 vorhanden sind, wobei die Trennplatte 4 und der Stromkollektor 5 auf der Brennstoffseite senkrecht zur Plattenebene vergleichsweise starr und der Stromkollektor 8 auf der Sauerstoffseite vergleichsweise flexibel ausgeführt sind und dass die Stromkollektoren 5; 8 auf beiden Seiten lateral parallel zur Plattenebene frei beweglich auf der jeweiligen Elektrode 3; 2 gleitend ausgeführt sind. Die Trennplatte 4 besteht aus einer oxydationsbeständigen warmfesten Legierung, der Stromkollektor 8 auf der Sauerstoffseite besteht aus einer oxydationsbeständigen warmfesten Legierung, die an den Berührungspunkten mit der Sauerstoffelektrode 2 vergleichsweise dick mit einem Edelmetall 9 beschichtet ist, während der Stromkollektor 5 auf der Brennstoffseite aus Nickel oder einer hochprozentigen Nickellegierung besteht und an den Berührungspunkten mit der Brennstoffelektrode 3 eine vergleichsweise dicke Schicht aus einem Edelmetall 6 trägt.

In einer speziellen Ausführung der Bauteilanordnung ist die Trennplatte mindestens teilweise auf der Brennstoffseite als Stromkollektor ausgebildet, so dass ein einziges, beiden Funktionen dienendes Bauelement 11 vorgesehen ist.

Vorzugsweise ist der Stromkollektor 5 auf der Brennstoffseite als gewelltes Band oder mit Noppen oder einer Vielzahl von Stegen oder Erhebungen versehenes Blech und der Stromkollektor 8 auf der Sauerstoffseite als eine Vielzahl von Kontaktfingern oder als schief gewelltes Band oder als schiefer Wendel oder als plissiertes Drahtgeflecht ausgebildet.

ausgebildet ist, derart, dass ein einziges, beiden Funktionen dienendes Bauelement (11) vorgesehen ist.

4. Bauteilanordnung nach einem der vorangegangenen Ansprüche, dadurch gekennzeichnet, dass der Stromkollektor (5) auf der Brennstoffseite als gewelltes Band oder mit Noppen oder einer Vielzahl von Stegen oder Erhebungen versehenes Blech und der Stromkollektor (8) auf der Sauerstoffseite als eine Vielzahl von Kontaktfingern oder als schief gewelltes Band oder als schiefer Wendel oder als plissiertes Drahtgeflecht ausgeführt ist.

## Ansprüche

1. Bauteilanordnung zur Stromführung zwischen benachbarten flachen, ebenen, stapelförmig angeordneten Hochtemperatur-Brennstoffzellen mit Feststoffelektrolyt (1) auf der Basis von dotiertem, stabilisiertem Zirkonoxyd, wobei jeweils die Sauerstoffelektrode (2) der einen Brennstoffzelle mit der Brennstoffelektrode (3) der nächstfolgenden Brennstoffzelle elektrisch verbunden und der zwischen den Elektroden (2; 3) liegende Zwischenraum durch eine gasdichte, elektrisch leitende Trennplatte (4) in zwei, die unterschiedlichen gasförmigen Medien Brennstoff (CH$_4$) und Sauerstoffträger (O$_2$) führenden Räume unterteilt ist, dadurch gekennzeichnet, dass eine Trennplatte (4) und beidseits von ihr angeordnete und mit ihr fest verbundene Stromkollektoren (5; 8) vorhanden sind, wobei die Trennplatte (4) und der Stromkollektor (5) auf der Brennstoffseite senkrecht zur Plattenebene vergleichsweise starr und der Stromkollektor (8) auf der Sauerstoffseite vergleichsweise flexibel ausgeführt sind und dass die Stromkollektoren (5; 8) auf beiden Seiten lateral parallel zur Plattenebene frei beweglich auf der jeweiligen Elektrode (3; 2) gleitend ausgeführt sind.

2. Bauteil nach Anspruch 1, dadurch gekennzeichnet, dass die Trennplatte (4) aus einer oxydationsbeständigen warmfesten Legierung besteht, und dass der Stromkollektor (8) auf der Sauerstoffseite aus einer oxydationsbeständigen warmfesten Legierung besteht, die an den Berührungspunkten mit der Sauerstoffelektrode (2) vergleichsweise dick mit einem Edelmetall (9) beschichtet ist, dass ferner der Stromkollektor (5) auf der Brennstoffseite aus Nickel oder einer hochprozentigen Nickellegierung besteht und an den Berührungspunkten mit der Brennstoffelektrode (3) eine vergleichsweise dicke Schicht aus einem Edelmetall (6) trägt.

3. Bauteilanordnung nach Anspruch 1, dadurch gekennzeichnet, dass die Trennplatte mindestens teilweise auf der Brennstoffseite als Stromkollektor

# FIG.1

# FIG.2

Europäisches
Patentamt

**EUROPÄISCHER
RECHERCHENBERICHT**

Nummer der Anmeldung

**EP 90 11 8797**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | CH-A-4 907 42   (BROWN & BOVERI) <br> — — — | | H 01 M <br> 8/02 <br> H 01 M 8/24 |
| A | FR-A-1 433 469   (COMPAGNIE FRANCAISE THOMSON-HOUSTON) <br> — — — | | |
| A | PATENT ABSTRACTS OF JAPAN, Band 11, Nr. 138 (E-503)[2585], 2. Mai 1987; <br> & JP-A-61 279 068 (ISHIKAWAJIMA HARIMA HEAVY IND. CO., LTD) 09-12-1986 <br> — — — | | |
| A | PATENT ABSTRACTS OF JAPAN, Band 10, Nr. 289 (E-442)[2345], 2. Oktober 1986; <br> & JP-A-61 109 262 (HITACHI LTD) 27-05-1986 <br> — — — | | |
| A | PATENT ABSTRACTS OF JAPAN, Band 12, Nr. 320 (E-651)[3167], 30. August 1988; <br> & JP-A-63 86 361 (HITACHI LTD) 16-04-1988 <br> — — — | | |
| A | US-A-3 300 344   (D.J. BRAY et al.) <br> — — — | | |
| A | FR-A-2 296 703   (COMMISSARIAT A L'ENERGIE ATOMIQUE) <br> — — — — — | | **RECHERCHIERTE SACHGEBIETE (Int. Cl.5)** <br><br> H 01 M |

Der vorliegende Recherchenbericht wurde für alle Patentansprüche erstellt

| Recherchenort | Abschlußdatum der Recherche | Prüfer |
|---|---|---|
| Den Haag | 21 Januar 91 | D'HONDT J.W. |